## Europäisches Patentamt

## European Patent Office

## Office européen des brevets

(19)

(11) Veröffentlichungsnummer: **0 092 035**
**B1**

(12) **EUROPÄISCHE PATENTSCHRIFT**

(45) Veröffentlichungstag der Patentschrift:
11.09.85

(51) Int. Cl.⁴: **H 04 B 3/23**

(21) Anmeldenummer: **83101500.3**

(22) Anmeldetag: **17.02.83**

(54) Verfahren und Schaltungsanordnung zur Durchführung des Verfahrens zur adaptiven Echolöschung in Endgeräten für Duplex-Datenübertragung über Zweidrahtleitungen.

(30) Priorität: **01.04.82 DE 3212056**

(43) Veröffentlichungstag der Anmeldung:
**26.10.83 Patentblatt 83/43**

(45) Bekanntmachung des Hinweises auf die Patenterteilung:
**11.09.85 Patentblatt 85/37**

(84) Benannte Vertragsstaaten:
**DE FR GB IT NL**

(56) Entgegenhaltungen:
**EP - A - 0 023 056**
**GB - A - 2 045 038**

**THE TRANSACTIONS OF THE IECE OF JAPAN, Band E61, Nr. 3, März 1978, Seiten 235-236, Tokyo, JP. G. KISHI et al.: "Least mean square error design of transversal-type circuits having prescribed squared sum of tapgains"**
**IEEE TRANSACTIONS ON COMMUNICATIONS, Band COM-25, Nr. 7, Juli 1977, Seiten 654-666, New York, USA S.B. WEINSTEIN: "A passband data-driven echo canceller for full-duplex transmission on two-wire circuits"**

(73) Patentinhaber: **ANT Nachrichtentechnik GmbH, Gerberstrasse 33, D-7150 Backnang (DE)**

(72) Erfinder: **Hespelt, Volker, Dr., Lichtensteinstrasse 44, D-7150 Backnang (DE)**
Erfinder: **Till, Reinhard, Dr., Lutherweg 39, D-7150 Backnang (DE)**

(74) Vertreter: **Schickle, Gerhard, Dipl.-Ing. et al, ANT Nachrichtentechnik GmbH Patent- und Lizenzabteilung Gerberstrasse 33, D-7150 Backnang (DE)**

## Beschreibung

Die Erfindung betrifft ein Verfahren und eine Schaltungsanordnung zur Durchführung des Verfahrens zur adaptiven Echolöschung in Endgeräten für Duplex-Datenübertragung über Zweidrahtleitungen gemäß dem Oberbegriff des Patentanspruches 1.

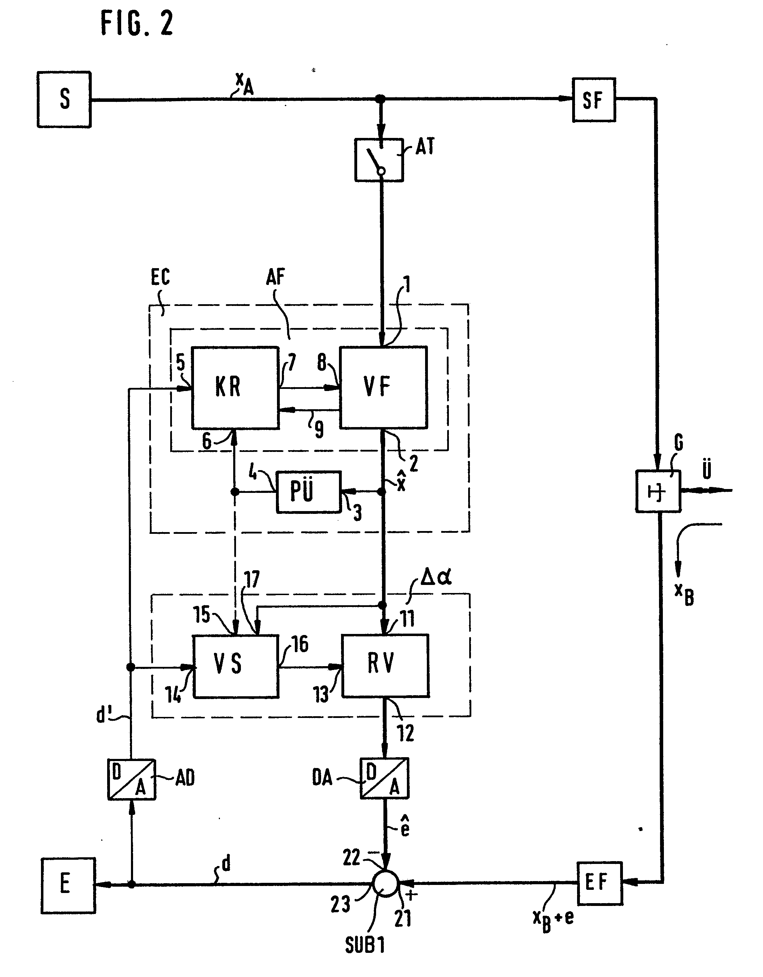

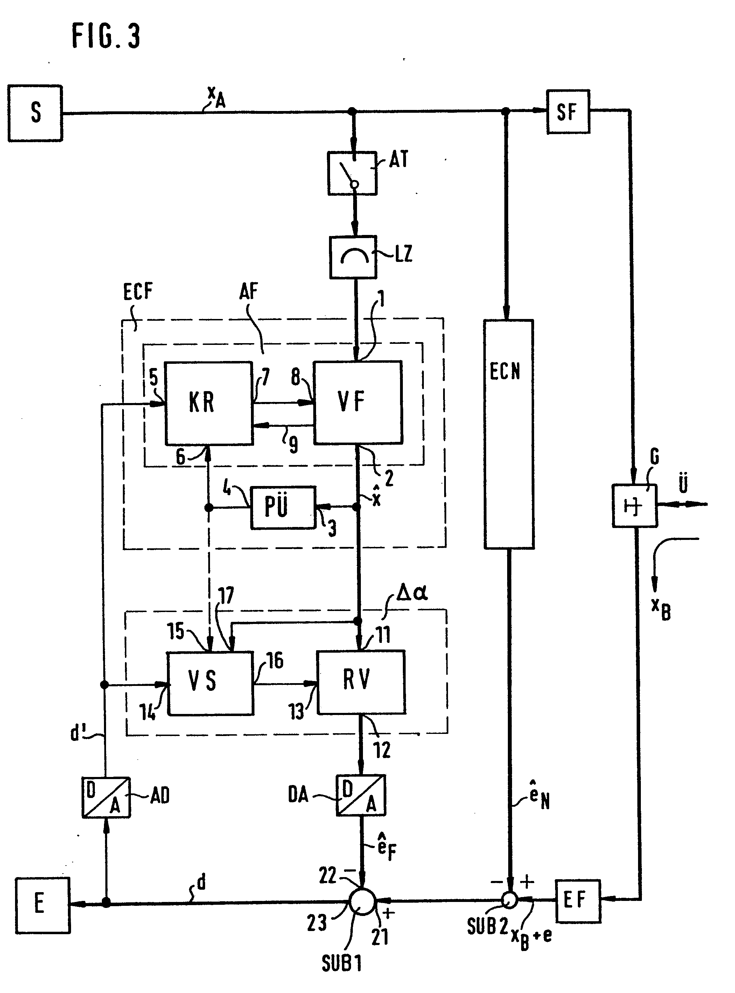

Bei der Datenübertragung über Fernsprechleitungen, die aus Zweidraht- und Vierdrahtleitungen bestehen, treten Echosignale auf, die bei Duplexbetrieb die Datenübertragung stören können. Um diese Störungen zu vermeiden ist es aus den Figuren 2 und 3 der Europäischen Patentanmeldung 0 023 056 bekannt, aus dem Sendesignal ein Echolöschsignal zu gewinnen und dieses von dem Echosignale aufweisenden Eingangssignal zu subtrahieren. Das Echolöschsignal wird dadurch gewonnen, daß das Sendesignal in mehreren Verzögerungsschritten verzögert und mit den einzelnen Verzögerungsschritten zugeordneten Koeffizienten multipliziert wird und alle so gewonnenen Produkte summiert werden. Das durch das Subtrahieren des Echolöschsignales vom Eingangssignal entstehende Differenzsignal enthält noch ein Restechosignal; dieses wird ausgenutzt, um die Koeffizienten so anzupassen, daß das Restechosignal eine Schwelle nicht überschreitet.

Dieses bekannte Verfahren hat den Nachteil, daß wegen der möglichen großen Pegelunterschiede der Echosignale, die Koeffizienten einen großen Wertebereich umfassen müssen, so daß eine Schaltungsanordnung zur Durchführung des bekannten Verfahrens sehr aufwendig ist.

Aufgabe der Erfindung ist es, ein Verfahren anzugeben, bei dem auch bei großen Pegelunterschieden der Echosignale die Koeffizienten nur einen kleinen Wertebereich umfassen müssen.

Diese Aufgabe wird durch ein Verfahren und eine Schaltungsanordnung nach dem Patentanspruch 1 bzw. 4 gelöst.

Zwecks guter Anpassung der Koeffizienten ist hierfür eine langsame Arbeitsweise zweckmäßig. Die Weiterbildung nach Anspruch 2 ermöglicht auch bei langsamer Anpassung der Koeffizienten eine vorteilhafte schnelle Pegeländerung des Echolöschsignals bei sich schnell änderndem Pegel des Echosignals.

Die Weiterbildung nach Anspruch 3 hat den Vorteil, daß bei einer Änderung der Summe aller Produkte sich der Pegel des Echolöschsignals nicht oder nur wenig ändert und deshalb keine oder nur eine geringe neue Anpassung der Verstärkung erfolgt.

Die Ansprüche 5 und 6 betreffen eine zweckmäßige Weiterbildung der erfindungsgemäßen Schaltungsanordnung nach Anspruch 4.

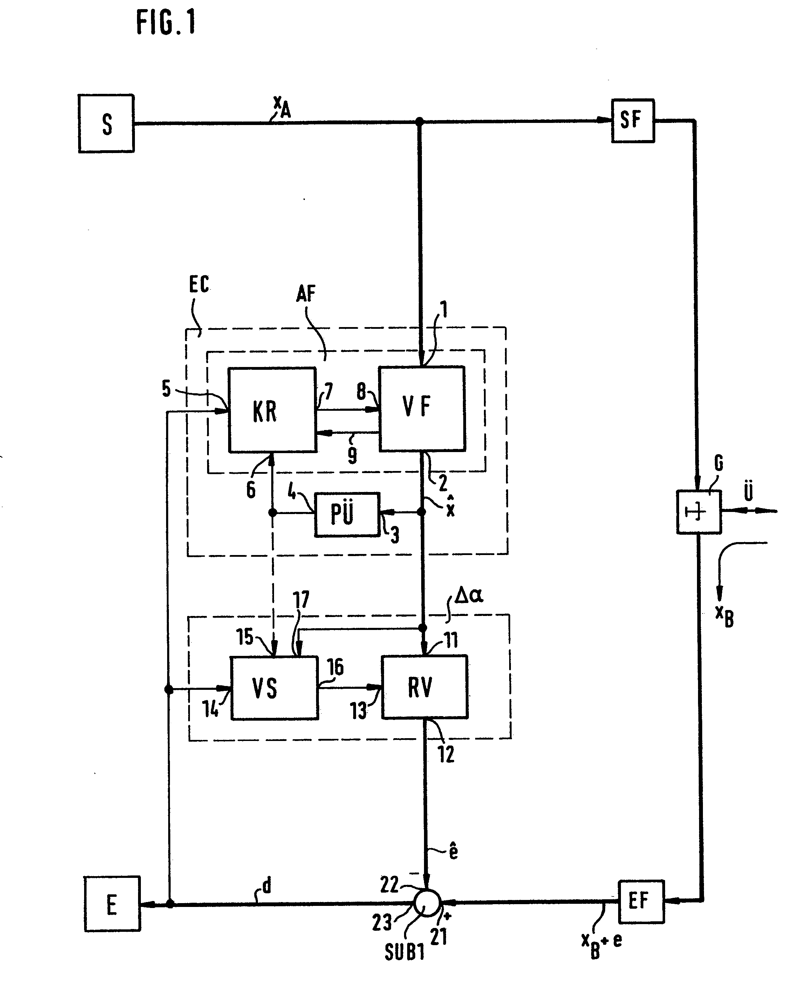

Die Erfindung wird anhand der in den Figuren 1 bis 5 dargestellten Ausführungsbeispiele beschrieben.

Die Figur 1 zeigt ein Endgerät für Duplex-Datenübertragung, das über einen Übertragungsweg Ü mit einem nicht gezeichneten Gegengerät verbunden ist. Der Übertragungsweg Ü besteht aus Zweidraht- und Vierdrahtleitungen, wobei sich an das Endgerät eine Zweidrahtleitung anschließt.

Ein Sender S sendet ein Sendesignal $x_A$, das über ein Sendefilter SF, eine Gabelschaltung G und den Übertragungsweg Ü zum Gegengerät übertragen wird. Gleichzeitig sendet auch das Gegengerät ein Sendesignal $x_B$, das über den Übertragungsweg Ü, die Gabelschaltung G, ein Empfangsfilter EF und einen Subtrahierer SUB1 in einen Empfänger E gelangt.

Wegen unvollkommener Nachbildung der Zweidrahtleitungen in der Gabelschaltung G und den weiteren, nicht gezeichneten Gabelschaltungen gelangt ein Teil des Sendesignals $x_A$ als Echosignal e zum Empfangsfilter EF, so daß an seinem Ausgang ein Eingangssignal $x_B + e$ erscheint.

Um das Echosignal e unwirksam zu machen, wird das Eingangssignal $x_B + e$ dem nicht invertierenden Eingang 21 des Subtrahierers SUB1 zugeführt, wobei seinem invertierenden Eingang 22 ein Echolöschsignal ê zugeführt wird. An seinem Ausgang 23 erscheint so ein Differenzsignal d, das aus dem Sendesignal $x_B$ und einem Restechosignal besteht und dem Empfänger E zugeführt wird.

Das Echolöschsignal ê wird durch einen Echolöscher EC und eine ihm nachgeschaltete Verstärkungsregelung $\Delta\alpha$ aus dem Sendesignal $x_A$ gewonnen. Der Echolöscher EC enthält eine Pegelüberwachung PÜ und ein adaptives Filter AF, das aus einem durch Koeffizienten steuerbaren, variablen Filter VF und einem Koeffizientenrechner KR besteht. Das variable Filter VF ist ein Orthogonalfilter, wie es z. B. in der deutschen Zeitschrift »Elektronik«, Jahrgang 1977, Heft 3, Seiten 69 bis 74 beschrieben ist. Die Verstärkungsregelung $\Delta\alpha$ besteht aus einem Regelverstärker RV und einer Verstärkungssteuerung VS.

Das Sendesignal $x_A$ wird über den Signaleingang 1 dem variablen Filter VF zugeführt, wo es in mehreren Verzögerungsschritten verzögert und mit Koeffizienten multipliziert wird. Die so entstehenden Produkte werden summiert und ergeben das Ausgangssignal x̂ des variablen Filters, das an dessen Signalausgang 2 abgenommen und dem Eingang 3 einer Pegelüberwachung PÜ, dem Signaleingang 11 eines Regelverstärkers RV sowie dem Sendesignaleingang 17 der Verstärkungssteuerung VS zugeführt wird. Am Signalausgang 12 des Regelverstärkers RV wird das Echolöschsignal ê abgenommen und dem invertierenden Eingang 22 des Subtrahierers SUB1 zugeführt. Zum Zwecke der Koeffizientenanpassung und Anpassung der Verstärkung ist der Ausgang 23 des Subtrahierers SUB1 außer mit dem Empfänger E noch mit einem ersten Koffizientenanpaßeingang 5 des Koeffizientenrechners KR und einem ersten Verstärkungssteuereingang 14 der Verstärkungssteuerung VS verbunden.

Jedem Koeffizienten-Multiplizierer des variablen Filters VF ist ein Koeffizient zugeordnet. Diese Koeffizienten werden vom Koeffizientenrechner KR in Abhängigkeit von dem Restechosignal und den verzögerten Sendesignalen ermittelt und über seine Koeffizientensteuerausgänge 7 (für jeden Koeffizienten einer) sowie Koeffizientensteuereingänge 8 an die Koeffizienten-Multiplizierer übertragen. Die verzögerten Sendesignale werden über die Verbindung 9 vom variablen Filter VF an den Koeffizientenrechner KR übertragen.

Die Koeffizienten-Anpassung durch den Koeffizientenrechner KR geschieht in der Weise, daß er die Koeffizienten so lange verändert, bis das Restechosignal eine erste Schwelle, die Ansprechschwelle des Koeffizientenrechners KR, nicht übersteigt. Dabei bewirkt die Pegelüberwachung PÜ, daß ein Mittelwert des Ausgangssignals x̂ um nicht mehr als einen bestimmten Betrag, nämlich die Ansprechschwelle der Pegelüberwachung, von einem vorgegebenen Sollpegel abweicht, indem sie über die Verbindung ihres Ausganges 4 mit einem zweiten Koeffizientenanpaßeingang 6 des Koeffizientenrechners KR alle Koeffizienten im Sinne einer Konstanthaltung des Mittelwertes verstellt. Als Mittelwert ist der arithmetische Mittelwert des gleichgerichteten Ausgangssignals x̂ vorgesehen, jedoch kann auch der quadratische Mittelwert benutzt werden.

Der Verstärkungsfaktor des Regelverstärkers RV kann durch eine an seinem Verstärkungsstelleingang 13 angelegte Stellgröße eingestellt werden. Diese Stellgröße liefert eine Verstärkungssteuerung VS an ihrem Steuerausgang 16 und steuert damit den Verstärkungsfaktor des Regelverstärkers RV und damit den Pegel des Echolöschsignals ê so, daß das Restechosignal eine bestimmte zweite Schwelle, nämlich die Ansprechschwelle der Verstärkungssteuerung VS, nicht überschreitet. Das Echosignal kann sich plötzlich in seinem Pegel ändern, z. B. dadurch, daß der Übertragungsweg Ü zum Gegengerät Trägerfrequenz- oder Richtfunkstrecken aufweist und es in einer solchen Strecke zu einer Umschaltung von den Betriebsgeräten auf die Ersatzgeräte mit abweichender Verstärkung kommt. Um schnelle Pegeländerungen des Echosignales auszugleichen, ist es vorteilhaft, die Verstärkungsanpassung 10- bis 100mal schneller als die Koeffizientenanpassung arbeiten zu lassen. Dadurch wird bewirkt, daß schnelle Pegeländerungen schnell ausgeglichen werden und trotzdem eine gute Koeffizientenanpassung wegen ihres langsamen Arbeitens erreicht wird. Außerdem wird erreicht, daß bei schnellen Pegeländerungen der Koeffizientenrechner nicht anspricht.

Wenn in dem zuvor beschriebenen Beispiel, in dem die in der Figur 1 gestrichelt gezeichnete Verbindung noch nicht enthalten ist, sich der Pegel des Ausgangssignals x̂ des Echolöschers EC ändert, z. B. um seinen Sollpegel wieder anzunehmen, so ändert sich zunächst auch das Echolöschsignal ê, und die Echolöschung ist weniger gut. Jedoch wird sofort über das Restechosignal und die Verstärkungssteuerung VS der Verstärkungsfaktor des Regelverstärkers RV so weit gegensinnig nachgestellt, daß das Restechosignal unterhalb der Ansprechschwelle der Verstärkungssteuerung VS liegt.

Eine schnellere gegensinnige Änderung des Verstärkungsfaktors bei Änderung des Ausgangssignales x̂ wird durch eine Weiterbildung der Erfindung nach dem Patentanspruch 5 bewirkt. Über die in der Figur 1 gestrichelt eingezeichnete Verbindung vom Ausgang 4 der Pegelüberwachung PÜ zu einem zweiten Verstärkungssteuereingang 15 der Verstärkungssteuerung VS wird bei einer Änderung aller Koeffizienten durch die Pegelüberwachung PÜ der Verstärkungsfaktor des Regelverstärkers RV gegensinnig verändert, und zwar noch ehe die Verstärkungssteuerung VS über ihren Eingang 14 anspricht.

Die Figur 1 bezieht sich auf ein Ausführungsbeispiel mit analoger Signalverarbeitung. Ein Beispiel mit digitaler Signalverarbeitung zeigt die Figur 2. Sie unterscheidet sich von der Figur 1 dadurch, daß zur Analog-Digital-Wandlung vor dem Signaleingang 1 des variablen Filters VF ein Abtaster AT angeordnet ist. Ferner ist zwischen dem Signalausgang 12 des Regelverstärkers RV und dem invertierenden Eingang 22 des Subtrahierers SUB1 ein Digital-Analog-Wandler DA eingefügt. Außerdem wird das Differenzsignal d dem Koeffizientenrechner KR und der Verstärkungssteuerung VS über einen Analog-Digital-Wandler AD als digitales Differenzsignal d' zugeführt.

Auf den Seiten 654 bis 666 der Zeitschrift »IEEE Transactions on Communications«, Vol. CPM-25, Nr. 7, Juli 1977 ist in dem Aufsatz »A Passband Data-Driven Echo Canceller for Full-Duplex Transmission on Two-Wire Circuits« beschrieben, wie mit einem Fernendecholöscher ein Fernendecholöschsignal und mit einem Nahendecholöscher ein Nahendecholöschsignal gewonnen wird.

Der Patentanspruch 6 und die Figur 3 beziehen sich auf die Anwendung der Erfindung zur Gewinnung eines Fernendecholöschsignales êF. Dazu dienen ein Abtaster AT, ein Laufzeitglied LZ, ein Fernendecholöscher ECF, eine Verstärkungsregelung Δα, ein Digital-Analog-Wandler DA und ein Analog-Digital-Wandler AD. Das Laufzeitglied LZ, das zwischen dem Abtaster AT und dem Signaleingang 1 des variablen Filters VF eingefügt ist, vermindert den Aufwand für das variable Filter. Die übrigen Baugruppen sind die gleichen wie in den Figuren 1 und 2.

Zur Gewinnung des Nahendecholöschsignals êN dient der Nahendecholöscher ECN. Er ist in einer der bekannten Arten ausgeführt.

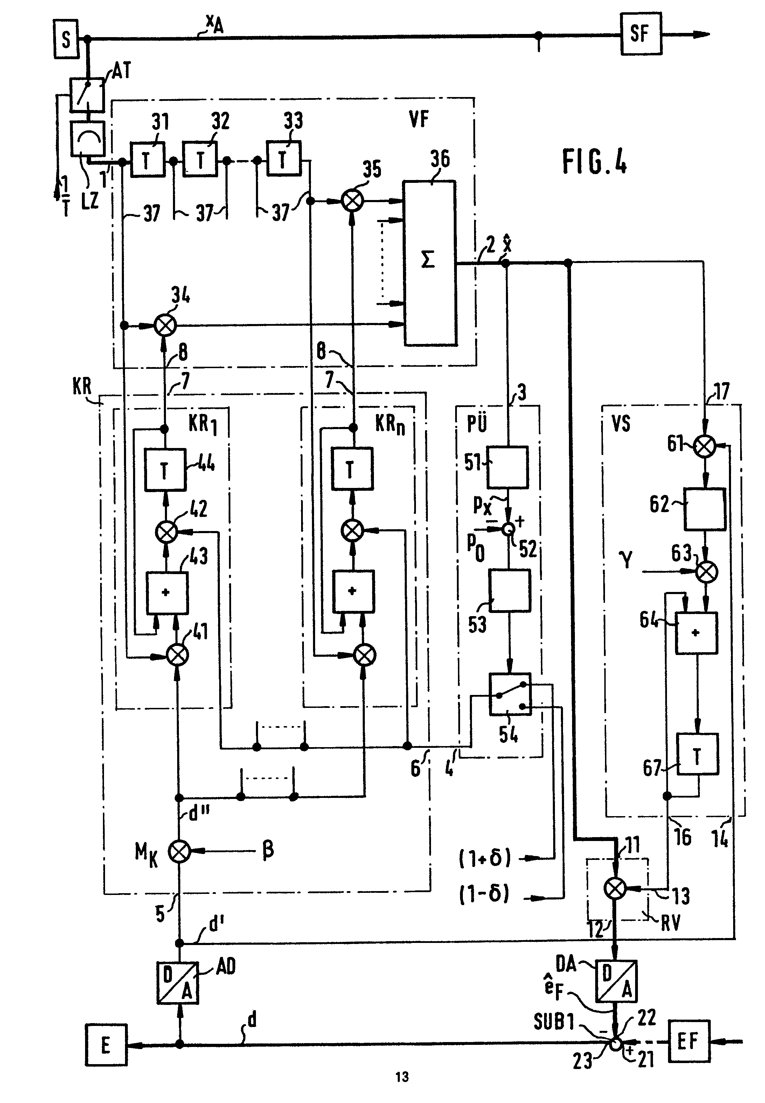

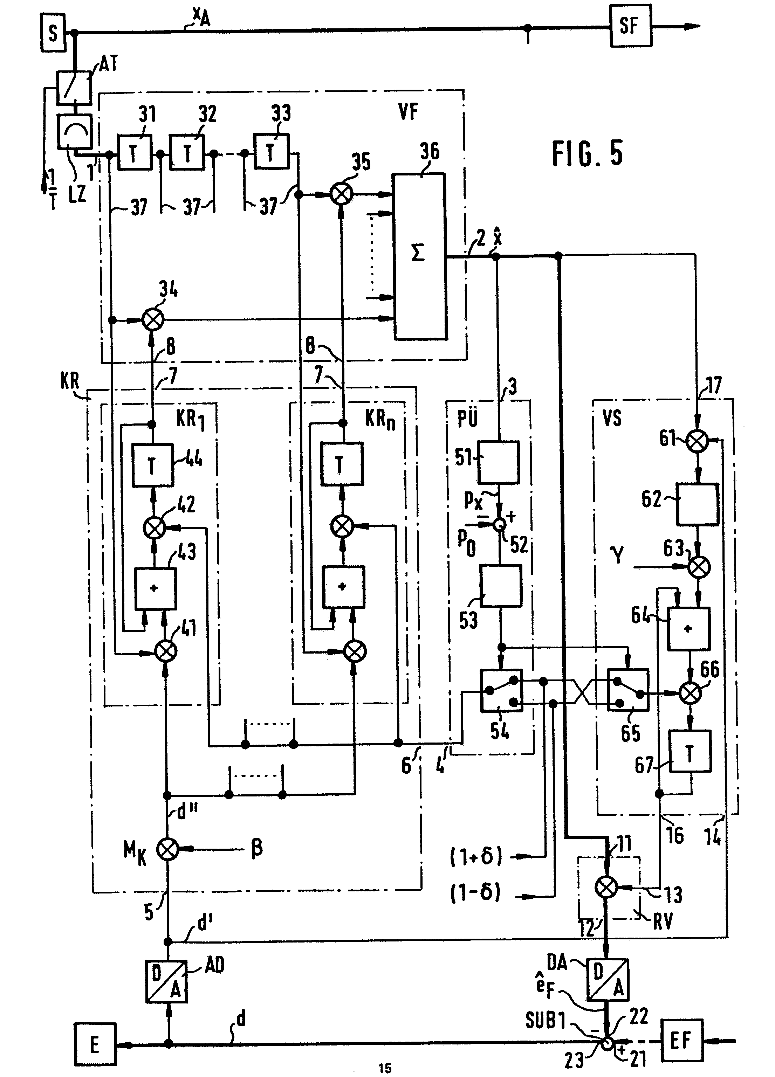

Anhand der Figuren 4 und 5 werden zwei Ausführungsbeispiele ausführlich beschrieben. Sie beziehen sich auf die Gewinnung des Fernendecholöschsignales und digitale Signalverarbeitung, wobei bei gleichen Baugruppen die glei-

chen Bezugzeichen wie in den Figuren 1, 2 und 3 verwendet wurden und auf die diesbezüglichen Teile der Beschreibung verwiesen wird. Das Beispiel nach der Figur 4 arbeitet ohne, das Beispiel nach der Figur 5 mit gleichzeitiger Veränderung des Verstärkungsfaktors durch die Pegelüberwachung PÜ.

Es wird zunächst die Figur 4 beschrieben. Der Abtaster AT wird mit der Taktfrequenz $\frac{1}{T}$ betrieben. Das variable Filter VF ist als Transversalfilter ausgeführt. Es besteht aus einer aus mehreren Verzögerungselementen gebildeten, Anzapfungen 37 aufweisenden Verzögerungskette, mehreren den Anzapfungen 37 zugeordneten Koeffizienten-Multiplizierern sowie einem Summierer 36. Jedes der Verzögerungselemente weist die Verzögerungszeit T auf. So entstehen an den Anzapfungen 37 vom Sendesignal $x_A$ abhängige, zeitverzögerte Signale.

Von den Verzögerungselementen sind nur die ersten beiden (31, 32) und das letzte (33) gezeichnet. Ebenso sind nur der erste (34) und der letzte (35) der Koeffizienten-Multiplizierer gezeichnet, deren Ausgänge mit Eingängen des Summierers 36 verbunden sind. Dessen Ausgang entspricht dem Signalausgang 2 des variablen Filters VF und führt das Ausgangssignal $\hat{x}$. Die ersten Eingänge der Koeffizienten-Multiplizierer sind mit den ihnen zugeordneten Anzapfungen verbunden, ihre zweiten Eingänge werden über die Koeffizientensteuereingänge 8 und die Koeffizientensteuerausgänge 7 des Koeffizientenrechners KR mit den Koeffizienten beaufschlagt.

Der Koeffizientenrechner KR enthält mehrere gleich aufgebaute Einzelkoeffizientenrechner, für jeden Koeffizienten einen. Es sind nur der erste ($KR_1$) und der letzte ($KR_n$) Einzelkoeffizientenrechner gezeichnet. Ferner ist ein allen Einzelkoeffizientenrechnern gemeinsamer Konstantenmultiplizierer $M_K$ vorgesehen. Jeder Einzelkoeffizientenrechner besteht aus den Multiplizierern 41 und 42, einem Addierer 43 und einem Verzögerungsglied 44.

Das digitale Differenzsignal d' wird über den ersten Koeffizientenanpaßeingang 5 des Koeffizientenrechners KR einem Konstantenmultiplizierer $M_K$ zugeführt, wo es mit einer einstellbaren Konstanten $\beta$ multipliziert wird. Sie bestimmt die Größe der einzelnen Schritte der Koeffizienten-Anpassung und damit auch ihre Schnelligkeit. Das so gewonnene multiplizierte digitale Differenzsignal d'' wird allen Multiplizierern 41 zugeführt, wo es mit den an den zugehörigen Anzapfungen 37 anliegenden zeitverzögerten Signalen verknüpft wird. Die Ausgänge der Multiplizierer 41 sind mit Eingängen der Addierer 43 verbunden. Zwischen den Addierern 43 und den Verzögerungsgliedern 44 sind die Multiplizierer 42 eingefügt, die mit einem von der Pegelüberwachung PÜ ermittelten Korrekturwert beaufschlagt werden. Die Verzögerungsglieder 44 verzögern die Signale um den Takt T und geben an ihren Ausgängen die Koeffizienten über die Koeffizientensteuerausgänge 7 an das variable Filter VF ab.

Die Pegelüberwachung PÜ besteht aus einem Pegelauswerter 51, einem Vergleicher 52, einem Vorzeichenentscheider 53 und einem Umschalter 54. Dem Pegelauswerter 51 wird über den Eingang 3 der Pegelüberwachung PÜ das Ausgangssignal $\hat{x}$ zugeführt, der daraus ein vom Mittelwert des Pegels des Ausgangssignales $\hat{x}$ abhängiges Signal $p_x$ gewinnt. Dieses Signal wird im Vergleicher 52 einem einstellbaren, dem Sollpegel entsprechenden Sollwert $p_o$ verglichen. Das so gewonnene Ausgangssignal des Vergleichers 52 steuert über den Vorzeichenentscheider 53 den Umschalter 54 in der Weise, daß bei zu niedrigem Pegel der Ausgang 4 der Pegelüberwachung PÜ zu einem ersten Korrekturwert $(1+d)$, bei zu hohem Pegel zu einen zweiten Korrekturwert $(1-d)$ durchgeschaltet ist und bei Übereinstimmung des Pegels mit seinem Sollpegel den Wert 1 führt. Übereinstimmung bedeutet, daß der Unterschied zwischen dem Signal $p_x$ und dem Sollwert $p_o$ kleiner ist als die Ansprechschwelle des Vergleichers 52.

Da der Ausgang 4 der Pegelüberwachung PÜ über den zweiten Koeffizientenanpaßeingang 6 des Koeffizientenrechners KR mit den Multiplizierern 43 aller Einzelkoeffizientenrechner verbunden ist, werden bei zu niedrigem Pegel des Ausgangssignales $\hat{x}$ alle Koeffizienten so lange mit jedem Takt T mit dem ersten Korrekturwert $(1+d)$ multipliziert, bis das Signal $p_x$ mit dem Sollwert $p_o$ übereinstimmt. Sinngemäß werden bei zu hohem Pegel alle Koeffizienten mit dem Korrekturwert $(1-d)$ multipliziert.

Die Verstärkungsteuerung VS enthält zwei Multiplizierer 61 und 63, einen Vorzeichenentscheider 62 sowie einen aus einem Addierer 64 und einem Verzögerungsglied 67 bestehenden Akkumulator. Der Multiplizierer 61 verknüpft das Ausgangssignal $\hat{x}$ des variablen Filters VF mit dem digitalen Differenzsignal d' und steuert mit dem Ergebnis den Vorzeichenentscheider 62, der je nach Polarität des Ergebnisses den Wert $+1$ oder $-1$ an den Multiplizierer 63 gibt. Dieser wird außerdem mit einer einstellbaren zweiten Konstanten $\gamma$ beaufschlagt, durch die die Größe der einzelnen Schritte und damit die Schnelligkeit der Verstärkungsanpassung bestimmt wird. Der Multiplizierer 63 gibt bei Anliegen des Wertes $+1$ den Wert $+\gamma$, bei Anliegen des Wertes $-1$ den Wert $-\gamma$ an seinem Ausgang ab, der mit einem Eingang des Addierers 64 verbunden ist. Der Multiplizierer 63 besteht aus einem Umschalter, der je nach dem an seinem Eingang anliegenden Wert $+1$ oder $-1$ entweder den Wert $+\gamma$ oder $-\gamma$ zum Ausgang durchschaltet.

Am Ausgang des Verzögerungsgliedes 67, das eine Verzögerungszeit T aufweist, wird die Stellgröße zur Steuerung des Verstärkungsfaktors des Regelverstärkers RV abgenommen und über den Steuerausgang 16 sowie den Verstärkungsstelleingang 13 dem Regelverstärkers RV zugeführt.

Das Beispiel nach der Figur 5 unterscheidet sich von dem nach der Figur 4 dadurch, daß die Verstärkungssteuerung VS zusätzlich einen Umschalter 65 sowie einen zwischen dem Addierer 64 und dem Verzögerungsglied 67 eingefügten Multiplizierer 66 aufweist. Der Umschalter 65 wird wie der Umschalter 54 vom Ausgang des Vorzeichenentscheiders 53 gesteuert und schaltet ebenso zwischen den beiden Korrekturwerten $(1+\delta)$ und $(1-\delta)$ um, jedoch gegensinnig. Da sein Ausgang mit dem Multiplizierer 66 verbunden ist, wird bei der Multiplikation aller Koeffizienten mit dem ersten Korrekturwert $(1+\delta)$ gleichzeitig die Stellgröße zur Steuerung des Verstärkungsfaktors mit dem zweiten Korrekturwert $(1-\delta)$ multipliziert und umgekehrt. So wird bei Änderung aller Koeffizienten der Verstärkungsfaktor gegensinnig geändert.

**Patentansprüche**

1. Verfahren zur adaptiven Echolöschung in Endgeräten für Duplex-Datenübertragung über Zweidrahtleitungen durch Gewinnung eines Echolöschsignals aus einem Sendesignal, indem das Sendesignal in mehreren Verzögerungsschritten verzögert und mit den einzelnen Verzögerungsschritten zugeordneten Koeffizienten multipliziert wird und alle Produkte summiert werden, daß das Echolöschsignal von einem Echosignale aufweisenden Eingangssignal subtrahiert wird und das so gewonnene Differenzsignal so zur Anpassung der Koeffizienten ausgewertet wird, daß das im Differenzsignal noch enthaltene Restechosignal eine erste Schwelle nicht überschreitet, dadurch gekennzeichnet, daß bei einer Abweichung des Pegels der Summe aller Produkte von einem Sollpegel eine solche Veränderung aller Koeffizienten vorgenommen wird, daß die Abweichung einen vorbestimmten Betrag nicht überschreitet, daß das Echolöschsignal aus der Summe aller Produkte durch Multiplikation mit einem Verstärkungsfaktor gewonnen wird, wobei der Verstärkungsfaktor so angepaßt wird, daß das Restechosignal eine zweite Schwelle nicht überschreitet.

2. Verfahren nach Anspruch 1, dadurch gekennzeichnet, daß die Anpassung des Verstärkungsfaktors schneller geschieht als die Anpassung der Koeffizienten.

3. Verfahren nach den Ansprüchen 1 oder 2, dadurch gekennzeichnet, daß bei Veränderung aller Koeffizienten der Verstärkungsfaktor gegensinnig verändert wird.

4. Schaltungsanordnung zur Durchführung des Verfahrens nach Anspruch 1 oder 2, wobei der Ausgang eines Senders (S) mit dem Signaleingang (1) eines durch Koeffizienten gesteuerten, variablen Filters (VF) verbunden ist, der Signalausgang (2) des variablen Filters mit dem invertierenden Eingang (22) eines Subtrahierers (SUB1) verbunden ist, dessen nicht invertierendem Eingang (21) des Eingangssignal zugeführt wird, der Ausgang (23) des Subtrahierers mit einem ersten Koeffizientenanpaßeingang (5) eines Koeffizientenrechners (KR) verbunden ist, welcher die Koeffizienten ermittelt, dadurch gekennzeichnet, daß der Signalausgang (2) des variablen Filters (VF) mit dem Eingang (3) einer Pegelüberwachung (PÜ) und dem Sendesignaleingang (17) einer Verstärkungssteuerung (VS) verbunden ist, daß der Ausgang (4) der Pegelüberwachung (PÜ) mit einem zweiten Koeffizientenanpaßeingang (6) des Koeffizientenrechners (KR) verbunden ist, daß zwischen dem Signalausgang (2) des variablen Filters (VF) und dem invertierenden Eingang (22) des Subtrahierers (SUB1) ein Regelverstärker (RV) eingefügt ist, dessen Verstärkungsstelleneingang (13) mit dem Steuerausgang (16) der Verstärkungssteuerung (VS) verbunden ist, und daß der Ausgang (23) des Subtrahierers (SUB1) mit einem ersten Verstärkungssteuereingang (14) der Verstärkungssteuerung (VS) verbunden ist (Fig. 1).

5. Schaltungsanordnung nach Anspruch 4 zur Durchführung des Verfahrens nach Anspruch 3, dadurch gekennzeichnet, daß der Ausgang (4) der Pegelüberwachung (PÜ) mit einem zweiten Verstärkungssteuereingang (15) der Verstärkungssteuerung (VS) verbunden ist (Fig. 1).

6. Schaltungsanordnung nach Anspruch 4 oder 5, gekennzeichnet durch die Verwendung zum Gewinnen eines Fernendecholöschsignales $(\hat{e}_F,$ (Fig. 3).

**Claims**

1. Method for the adaptive echo cancellation in terminal devices for duplex data transmission over two-wire lines through obtaining an echo cancellation signal form a transmitted signal in that the transmitted signal is delayed in several delay steps and multiplied by co-efficients associated with the individual delay steps and all products are summated, that the echo cancellation signal is subtracted from an input signal displaying echo signals and that the difference signal thus obtained is so evaluated for the adaptation of the co-efficients that the residual echo signal still contained in the difference signal does not exceed a first threshold, characterised thereby, that in the case of a deviation of the level of the sum of all products from a target level, such a variation of all co-efficients is undertaken that the deviation does not exceed a predetermined amount, and that the echo cancellation signal is obtained from the sum of all products through multiplication by an amplification factor, wherein the amplification factor is so adapted that the residual echo signal does not exceed a second threshold.

2. Method according to claim 1, characterised thereby, that the adaptation of the amplification factor occurs more rapidly than the adaptation of the co-efficients.

3. Method according to claims 1 or 2, characterised thereby, that in the case of variation of all co-efficients, the amplification factor is varied in opposite sense.

4. Circuit arrangement for the performance of the method according to claim 1 or 2, wherein the output of a transmitter (S) is connected with the signal input (1) of a variable filter (VF) controlled by co-efficients, the signal output (2) of the variable filter is connected with the inverting input (22) of a subtractor (SUB1), to the non-inverting input (21) of which the input signal is conducted and the output (23) ot the subtractor is connected with a first co-efficient adaptation input (5) of a co-efficient valuator (KR), which determines the co-efficients, characterised thereby, that the signal output (2) of the variable filter (VF) is connected with the input (3) of a level monitor (PÜ) and the transmission signal input (17) of an amplification control (VS), that the output (4) of the level monitor (PÜ) is connected with a second co-efficient adaptation input (6) of the co-efficient calculator (KR), that a regulating amplifier (RV), the amplification setting input (13) of which is connected with the control output (16) of the amplification control (VS), is inserted between the signal output (2) of the variable filter and the inverting input (22) of the subtractor (SUB1) and that the output (23) of the subtractor (SUB1) is connected with a first amplification control input (14) of the amplification control (VS) (Fig. 1).

5. Circuit arrangement according to claim 4 for the performance of the method according to claim 3, characterised thereby, that the output (4) of the level monitor (PÜ) is connected with a second amplification control input (15) of the amplification control (VS) (Fig. 1).

6. Circuit arrangement according to claim 4 or 5, characterised by the use for the obtaining of a remote echo cancellation signal ($\hat{e}_F$) (Fig. 3).


**Revendications**

1. Procédé de suppression adaptative de l'écho dans des terminaux pour la transmission de données en duplex sur des circuits deux fils, par production d'un signal de suppression d'écho à partier d'un signal d'émission, qui est retardé de plusieurs pas, puis multiplié par les coefficients affectés aux divers pas, tous les produits étant ensuite sommés; le signal de suppression d'écho est soustrait d'un signal d'entrée contenant des signaux d'écho et le signal différentiel ainsi obtenu étant traduit pour l'adaptation des coefficients, de façon que le signal d'écho résiduel encore contenu dans le signal différentiel ne dépasse pas un premier seuil, ledit procédé étant caractérisé en ce qu'un écart du niveau de la somme de tous les produits par rapport à un niveau de consigne fait varier tous les coefficients de façon que l'écart ne dépasse pas une valeur absolue prédéterminée; et le signal de suppression d'écho est obtenu à partir de la somme de tous les produits par multiplication par un gain, qui est adapté de façon que le signal d'écho résiduel ne dépasse pas un second seuil.

2. Procédé selon revendication 1, caractérisé en ce que l'adaptation du gain est plus rapide que celle des coefficients.

3. Procédé selon une des revendications 1 ou 2, caractérisé en ce qu'une variation de tous les coefficients entraîne une variation du gain en sens inverse.

4. Montage pour la mise en oeuvre du procédé selon une des revendications 1 ou 2, dans lequel la sortie d'un émetteur (S) est reliée à l'entrée de signal (1) d'un filtre variable (VF) commandé par des coefficients, la sortie de signal (2) du filtre variable est reliée à l'entrée inverseuse (22) d'un soustracteur (SUB1), dont l'entrée non-inverseuse (21) reçoit le signal d'entrée, et la sortie (23) du soustracteur est reliée à une première entrée (5) d'adaptation des coefficients d'un calculateur de coefficients (KR), qui détermine les coefficients, ledit montage étant caractérisé en ce que la sortie de signal (2) du filtre variable (VF) est reliée à l'entrée (3) d'une surveillance de niveau (PU) et à l'entrée (17) de signal d'émission d'une commande de gain (VS); la sortie (4) de la surveillance de niveau (PU) est reliée à une seconde entrée d'adaptation des coefficients (6) du calculateur de coefficients (KR); entre la sortie de signal (2) du filtre variable (VF) et l'entrée inverseuse (22) du soustracteur (SUB1) est inséré un amplificateur régulateur (RV), dont l'entrée de réglage du gain (13) est reliée à la sortie de commande (16) de la commande de gain (VS); et la sortie (23) du soustracteur (SUB1) est reliée à une première entrée de commande de gain (14) de la commande de gain (VS).

5. Montage selon revendication 4 pour la mise en oeuvre du procédé selon revendication 3, caractérisé en ce que la sortie (4) de la surveillance de niveau (PU) est reliée à une seconde entrée de commande du gain (15) de la commande de gain (VS).

6. Montage selon une des revendications 4 ou 5, caractérisé par son utilisation pour la production d'un signal de suppression d'écho lointain ($\hat{e}_F$).

# FIG.1

# FIG. 2

# FIG. 3

FIG.4

FIG. 5